# EUROPEAN PATENT APPLICATION

(11) **EP 4 478 750 A1**
(43) Date of publication of application: **18.12.2024**
(21) Application number: 23178705.2
(22) Date of filing: 12.06.2023
(51) Int. Cl.: H04W 4/029, G06Q 10/0833

(54) **METHOD FOR LOCATING OBJECT ATTACHED TO WIRELESS COMMUNICATION DEVICE**

(71) Applicant: Nagravision Sàrl, 1033 Cheseaux-sur-Lausanne (CH)
(72) Inventor: Depraz, Florian, 1033 Cheseaux-sur-Lausanne (CH)
(74) Representative: Novagraaf International SA

(57) **Abstract**

The wireless communication device (100) includes a plurality of environmental sensors (106) configured to measure various environmental properties of an environment surrounding the object (200). The method comprises the steps, performed by a processor (114), of:
- receiving measured environmental data from the plurality of environmental sensors (106) measuring the various environmental properties;
- determining location information of the object (200) using the measured environmental data.

## Description

### TECHNICAL FIELD

The present disclosure relates to wireless communication devices used to track or find or locate objects such as keys, luggage, purses, among others.

### BACKGROUND

It is known to use a wireless communication device, also called tracking device, attached to an object, such as a key, luggage, purse, bag, electronic device, vehicle, cat, dog, etc., to help a person to locate and/or find said object. The wireless communication device is small, usually about a few centimeters wide and a few millimeters thick, and can be attached to the object for example with a strap or keychain. It can include a processor, a short-range wireless communication circuit, using for example BLE (Bluetooth Low Energy), an antenna, a non-volatile memory, and an internal power source.

The wireless communication device can interact with one or more external devices, such as a gateway arranged in an area (e.g., a building site), or a user equipment such as a smartphone. If the wireless communication device is within a Bluetooth range of the external device, it can receive a command from this external device to play a ringtone, using an internal loudspeaker, to audibly alert a user of its position.

The wireless communication device may also be configured to transmit advertising packets including a device identifier to be located by external devices, for example using a trilateration algorithm. This may allow to determine a zone where the object is located, or even a precise position of the object.

However, in certain circumstances, the user cannot correctly hear the ringtone emitted by the wireless communication device, and/or the localization of the wireless communication device may be imprecise, or even impossible.

Therefore, it is desired to improve localization of the object to which the wireless communication device is attached.

### SUMMARY

The present disclosure concerns a method for locating an object attached to a wireless communication device, said wireless communication device including a plurality of environmental sensors configured to measure various environmental properties of an environment surrounding the object, the method comprising the steps, performed by a processor, of:
- receiving measured environmental data from the plurality of environmental sensors measuring the various environmental properties; and
- determining location information of the object using the measured environmental data.

The environmental sensors measure different properties or conditions of an environment surrounding the wireless communication device and the object to which it is attached, to provide a set of measured environmental data. The set of measured environmental data is used by a processor to determine a location information of the device and object. The location information may facilitate the location of the wireless communication device and the object to which it is attached.

In an embodiment, the step of determining the location information of the object may include a step of determining at least one category of location where the object is located, from a plurality of predetermined categories of location, based on the measured environmental data.

The location information can indicate an environment, or a type of location, where the wireless communication device and the object are located. For example, the location information indicates that the object is located outside or inside, or in a specific environment like a bin, a drawer, a vehicle, ...

In an embodiment, the step of determining the at least one category of location where the object is located comprises:
- providing the measured environmental data as input to a trained machine learning model;
- outputting said at least one category of location from the trained machine learning model.

For example, the machine learning model can perform a task of classification.

In an embodiment, the steps of receiving the measured environmental data from the plurality of environmental sensors and determining a location information of the object using the measured environmental data are periodically performed.

In an embodiment, the method may further comprise a step of wirelessly transmitting the determined location information from the wireless communication device to an external device. For example, the external device may be a user equipment, such as a smartphone.

In an embodiment, the method may further comprise the steps, performed by the processor, of:
- comparing the determined category of location to a group of abnormal categories of location; and
- detecting an abnormality of location if the determined category of location matches an abnormal category of location;
wherein the step of transmitting the location information from the wireless communication device to the external device is executed upon detection of an abnormality of location.

In an embodiment, the method may further comprise a step of detecting a predetermined event based on sensor data; and
wherein the steps of receiving the measured environmental data from the plurality of environmental sensors and determining a location information of the object using the measured environmental data are performed upon detection of the predetermined event.

The measured environmental data may include data from the group including temperature data, pressure data, humidity data, gas data, air quality data and light data.

In an embodiment, the step of determining a location information of the object using the measured environmental data is performed by said wireless communication device.

In another embodiment, the method further comprises a step of wirelessly transmitting, from the wireless communication device to an external device, the measured environmental data from the plurality of environmental sensors measuring the various environmental properties, and
wherein the step of determining a location information of the object using the measured environmental data is performed by said external device.

The present disclosure also concerns a wireless communication device for locating an object, configured to be attached to said object, comprising a plurality of environmental sensors configured to measure various environmental properties of an environment of the object, and a processor configured to carry out the steps of the method previously defined.

The present disclosure also concerns a device for locating an object to which a wireless communication device is attached, said wireless communication device having a plurality of environmental sensors configured to measure various environmental properties of an environment of the object, said device for locating the object including
- a wireless communication module configured to communicate with said wireless communication device, and
- a processor configured to carry out the steps of the method previously defined.

The present disclosure also concerns:
- a computer program comprising instructions which, when the program is executed by a computer, cause the computer to carry out the method previously described;
- a computer-readable medium having stored thereon the computer program above defined.

### BRIEF DESCRIPTION OF THE DRAWINGS

Other features, purposes and advantages of the disclosure will become more explicit by means of reading the detailed statement of the non-restrictive embodiments made with reference to the accompanying drawings.
Figure 1 shows a simplified block diagram of a system including a wireless communication device, an object attached to the wireless communication device, and an external device, according to an embodiment.
Figures 2 to 5 show flowcharts of a method for locating the object of figure 1, according to different embodiments.

### DETAILED DESCRIPTION

The following detailed description describes various features and functions of the disclosed devices, systems and methods with reference to the accompanying figures. In the figures, similar symbols identify similar elements or steps, unless context dictates otherwise. The illustrative system, device and method embodiments described herein are not meant to be limiting. It may be readily understood by those skilled in the art that certain aspects of the disclosed systems, devices and methods can be arranged and combined in a wide variety of different configurations, all of which are contemplated herein.

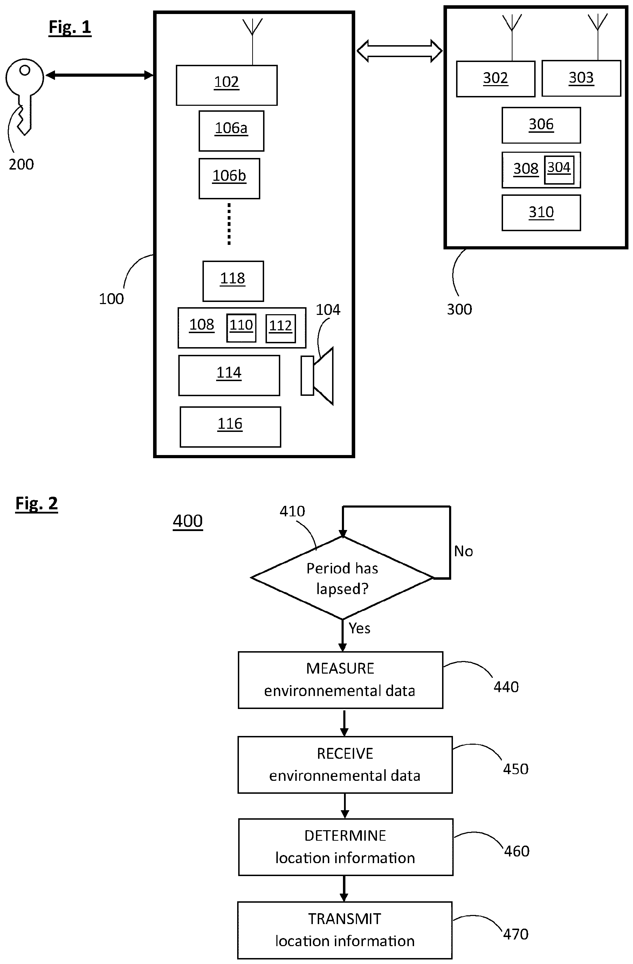

Figure 1 shows a simplified block diagram of a system including a wireless communication device 100, an object 200 to which the wireless communication device 100 is attached, and an external device 300, according to an embodiment.

The wireless communication device 100, also called tracking device, can be used to track, find, and/or locate the object 200, which it is attached to. For example, to help a user find the object 200, the wireless communication device 100 may emit an alert sound, like a ringtone, upon reception of a wireless signal from an external device, and/or transmit a wireless signal to enable one or more external devices to locate it.

The object 200 can be for example a key, a group of keys, a bag, an electronic device, a purse, a vehicle, a cat, a dog, among others.

The wireless communication device 100 may have at least one of the two following tracking or finding functions:
- receiving a wireless command signal from an external device (e.g., the external device 300) and emitting an alert sound (e.g., a ringtone) upon reception of said command to audibly signal the object position to a user;
- emitting a wireless or radio signal, that can be termed as an advertising signal, for example to allow one or more external devices to locate it.

### First embodiment

In a first embodiment, the wireless communication device 100 includes a wireless or radio communication module 102, a plurality of environmental sensors 106 (referenced as 106a, 106b, ... in figure 1), a non-volatile memory 108, a processor 114 and a power source 116.

The wireless communication module 102 may include a wireless communication circuit connected to at least one antenna module. The antenna module can include one or more antenna elements for transmission and/or reception of wireless (i.e., radio) signals. The wireless communication module 102 may be configured to wirelessly couple to or communicate with an external device (e.g., the external device 300 in figure 1). It is arranged to communicate according to one or more types of wireless communication (e.g., protocols). In an embodiment, the wireless communication module 102 is arranged to communicate according to one or more types of short-range communication such as Bluetooth or Bluetooth Low Energy (BLE). Additionally, or alternatively, the wireless communication circuit 102 may be configured to use Wi-Fi protocols and/or UWB (Ultra-Wide Band) technology to communicate.

The plurality of environmental sensors 106, referenced as 106a, 106b, ... in figure 1, include environmental sensors of different types. They are respectively configured to measure (i.e., sense or detect) various environmental properties (i.e., different environmental conditions or parameters) of an environment surrounding the wireless communication device 100 and the object 200 to which it is attached. The environmental sensors 106 may include at least part of a temperature sensor, a pressure sensor, a humidity sensor, a light sensor, gas sensor, air quality sensor and any other type of sensor configured to detect an environmental condition or property or parameter of an environment surrounding the wireless communication device 100 and the object 200 attached thereto.

Optionally, the wireless communication device 100 may include a loudspeaker 104, or acoustic transducer.

Optionally, the wireless communication device 100 may further include a motion sensor configured to detect a predetermined movement of the device 100. For example, the device 100 includes a fall sensor 118 configured to detect a free fall of the device 100. For example, the fall sensor 118 may include an accelerometer, and/or a gyroscope, be configured to detect a fall for example based on a predetermined pattern of a fall.

The memory 108 may store instructions 110 (e.g., program logic) executable by the processor 114 to execute various device functions. The memory 108 may contain additional instructions as well, including instructions to transmit data or signal to, receive data or signal from, interact with, and/or control one or more of the elements 102-118 of the device 100.

The power source 116 is configured to provide power to some or all of the elements of the wireless communication device 100. To this end, the power source 116 may include, for example, a rechargeable or non-rechargeable battery.

The processor 114 is connected to the different elements of the wireless communication device 100. It is configured to control the operations of the wireless communication device 100. In another embodiment, the wireless communication device 100 may have a plurality of processors.

In the present disclosure, the processor 114 is configured to receive environmental data measured (i.e., detected or sensed) by the plurality of environmental sensors 106 measuring various environmental properties (i.e., conditions or parameters) of an environment surrounding the device 100 and attached object 200, and to determine a location information of the device 100 and object 200, using the measured environmental data. The determined location information may not indicate a precise location of the device 100 and object 200. It may be indicative of where the device 100 is located, more precisely of a type of environment where the device 100 is located, for example an indication of at least one category or type of location where the device 100 (and the object 200 it is attached to) is located. For example, the location information may indicate that the device 100 is located:
- indoor or outdoor, and/or
- on a ground floor, a higher ground floor, or a lower ground floor, and/or
- in a drawer (or a cabinet), a trash can, a vehicle, and/or any other type of location where the object 200 might be left behind or lost.

The determination of the location information of the device 100 and object 200, performed by the processor 114, may include determination of a category of location from a plurality of predetermined categories of location (e.g., the above listed categories of location), based on the measured environmental data from the environmental sensors 106. For that purpose, in an embodiment, the processor 114 may use a trained machine learning model 112, for example a neural network, configured to receive as input the measured environmental data and output at least one category of location from a plurality of predetermined categories of location. Such a machine learning model 112 may be trained using a training dataset including:
- input training data comprising environmental data measured by environmental sensors like the sensors 106 of the device 100 in multiple environments (different from one another), and
- output training data comprising, for each environment, at least one indication of a predetermined type or category of environment or location (e.g., indoor/outdoor, ground floor/higher ground floor/lower ground floor, drawer/bin/vehicle, ...).

The machine learning model 112 may be configured to perform a task of classification.

In a variant, instead of outputting one or more predetermined category/ies of location, the machine learning model 112 may output probabilities respectively associated with different predetermined categories or types of location. For example, the machine learning model 112 may output probabilities that the device 100 and object 200 are located outdoor (e.g., probability of 30% associated with an outdoor location) and indoor (e.g., probability of 70% associated with an indoor location).

The machine learning model 112 may be stored in the memory 108.

The processor 114 may be configured to periodically determine the location information of the device 100 and object 200, for example once per hour (this periodicity is only illustrative and non-limitative).

Alternatively, or additionally, the processor 114 may be configured to determine the location information of the device 100 and object 200 upon reception of a request from the external device 300.

The wireless communication device 100 may be further configured to wirelessly transmit the determined location information to an external device, such as the external device 300, for example a user equipment. The transmission of the determined location information may be performed upon reception of a request from the external device 300, and/or periodically.

Alternatively, or additionally, the processor 114 may be configured to detect an abnormality, more precisely an abnormality of location of the device 100, if the determined category of location corresponds to an abnormal location or category of location from a group of predetermined abnormal categories of location. The processor 114 may be configured to transmit the location information of the device 100 (and the object 200 it is attached to), upon detection of an abnormality of location.

Optionally, the processor 114 may be configured to detect a predetermined event from a plurality of predetermined events, based on sensor data for example from the motion sensor, the fall sensor 118, and/or the environmental sensors 106. For example, the predetermined events may include a free fall on the ground of the device 100, a stoppage of motion of the device 100, a change in light environmental conditions, etc.. The processor 114 may be configured to determine current location information of the device 100 and object 200, based on measured environmental data from the environmental sensors 106, upon detection of one of these predetermined events.

A simplified block diagram of the external device 300 is illustrated in figure 1, according to the first embodiment. It may include a wireless communication module 302, at least one processor 306, at least one non-volatile memory 308, and a power source 310. For example, the external device 300 may be a user equipment, such as a smartphone, or any communication device external to the wireless communication device 100.

The wireless communication module 302 may be configured to wirelessly couple to or communicate with the wireless communication device 100. It may include a wireless communication circuit connected to an antenna module. The wireless communication module 302 may be arranged to communicate according to one or more types of wireless communication (e.g., protocols), including the same type(s) of wireless communication as the one(s) used by the wireless communication device 100. In an embodiment, the wireless communication module 302 is arranged to communicate according to one or more types of short-range communication such as Bluetooth or Bluetooth Low Energy (BLE). Additionally, or alternatively, the wireless communication module 302 may be configured to use Wi-Fi protocols and/or UWB (Ultra-Wide Band) technology to communicate.

Optionally, the external device 300 may include a second wireless communication module 303 configured to communicate according to another type of wireless communication, different from the wireless communication of the first wireless communication module 302. In an embodiment, the second wireless communication module 303 is configured to communicate through a mobile communication network and/or a Wi-Fi network for example.

The memory 308 may contain instructions 304 (e.g., program logic) executable by the processor 306 to execute various device functions. The memory 308 may contain additional instructions as well, including instructions to transmit data or signal to, receive data or signal from, interact with, and/or control one or more of the elements of the external device 300.

A method 400 for locating the object 200, more precisely for determining location information of the object 200, using the wireless communication device 100, corresponding to the operation of the wireless communication device 100, will now be described, with reference to figure 2, according to a first embodiment.

In some embodiments, the method 400 may be accomplished with one or more additional operations not described and/or without one or more of the operations discussed. Additionally, the order in which the operations of the method 400 are illustrated in figure 2 and described below is not intended to be limiting.

The method 400 according to the first embodiment comprises a step 440, performed by the environmental sensors 106, for example under control of the processor 114, of measuring various environmental properties (i.e., conditions or parameters) of an environment surrounding the device 100 and object 200 to which it is attached. The sensors 106 measuring the different environmental properties of the environment surrounding the device 100 and object 200 transmit measured environmental data to the processor 114. The measured environmental data, received by the processor 114 in a step 450, may include at least part of temperature data, pressure data, humidity data, light data, gas data, air quality data, and any other type of sensor data describing a property (or condition or parameter) of an environment surrounding the device 100 and the object 200 to which it is attached.

The method 400 according to the first embodiment further includes a step 460, performed by the processor 114, of determining a location information of the device 100 and object 200 to which it is attached, using the measured environmental data.

In the step 460, the processor 114 may determine at least one category or class of location where the device 100 and object 200 are located, based on the measured environmental data received in the step 450. Thus, the processor 114 may process the measured environmental data to determined one or more categories of location for the device 100 and object 200.

In an embodiment, in the step 460, the processor 114 uses the pretrained machine learning model 112 to determine the one or more categories of location where the device 100 and object 200 are located. For that purpose, the measured environmental data, received in the step 450, is provided as input data to the machine learning model 112 that determines or estimates one or more categories of location where the device 100 and object 200 are located, and outputs the determined category (or categories) of location.

Optionally, the step 440 may include acquiring other sensor data, for example motion data from a motion sensor and/or data from the fall sensor 118 (e.g., an accelerometer). Then, the processor 114, or the sensor itself, may detect a predetermined movement of the device 100 and object 200, based on the sensed motion data, this predetermined movement being associated with a specific category of location. For example, the movement of opening and closing a drawer can be detected based on data from a motion sensor such as an accelerometer. This movement can be associated with the category of location "drawer". Thus, the determination of the category of location can be based on motion data.

In an illustrative example, in the step 460, the processor 114 may determine that the device 100 and object 200 are located outdoor. In another illustrative example, the processor 114 may determine that the device 100 and object 200 are located indoor at a higher ground floor, in a drawer.

Alternatively, in the step 460, the processor 114 may determine probabilities associated with different predetermined categories of location, for example using the pretrained machine learning model. In an illustrative example, in the step 460, the processor 114 may determine a probability of 70% for the device 100 and object 200 to be located outdoor and a probability of 30% for the device 100 and object 200 to be located indoor.

In a step 470, the device 100 may wirelessly transmit the determined location information, including the one or more determined categories of location, to the external device 300.

The steps 440, 450, 460 and 470 may be periodically performed, as illustrated by the loop 410 in figure 2.

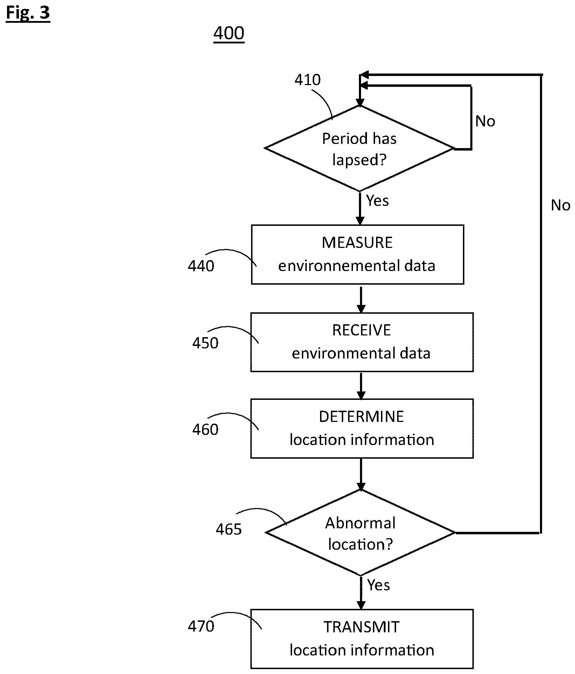

In a variant shown in figure 3, the determined location information of the device 100 and object 200 is transmitted to the external device 300 upon detection of an abnormality of location. In the variant, after determination of the location information in the step 460, said location information including one or more categories of location, the processor 114 may compare the one or more determined categories to a group of abnormal categories of location, predetermined and stored in memory 108, in a step 465. The abnormal categories of location may include for example a trash can, a drawer, floor of a car, and outdoor. If a determined category of location matches an abnormal category of location, the processor 114 detects an abnormality of location (step 465: yes). Then, in the step 470, the device 100 may wirelessly transmit the location information, including the one or more categories of location determined in the step 460, only upon detection of the abnormality of location (step 465: yes).

Thus, the determined location information of the device 100 and object 200 may be wirelessly transmitted to the external device 300 either periodically, or upon detection of an abnormality of location.

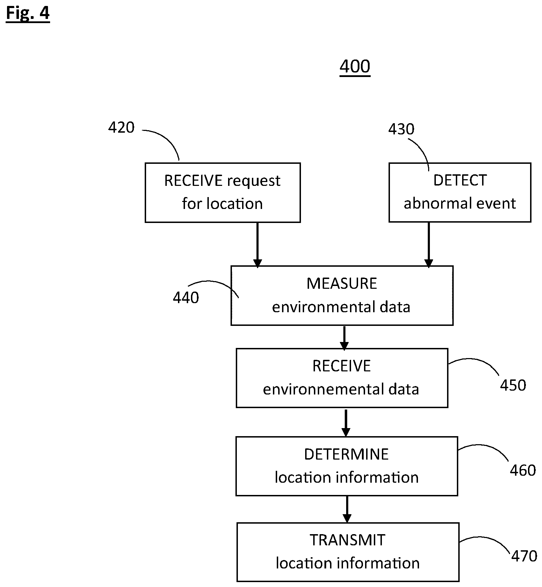

Alternatively, or additionally, the steps 440, 450, 460 and 470 may be performed upon reception by the device 100 of a wireless request for location from the external device 300, in a step 420 as represented in figure 4.

Alternatively, or additionally, the steps 440, 450, 460 and 470 may be performed upon detection of a predetermined event, such as a fall of the device 100, a change in light condition, a stoppage of motion, in a step 430, as represented in figure 4. For example, the fall sensor 118 may be configured to automatically detect a fall of the device 100 and notify the detected fall to the processor 114. Upon notification of the predetermined event (e.g., a fall of the device 100), the processor 114 may control the sensors 106 to measure the current environmental properties or conditions in the environment surrounding the device 100 and object 200 in step 440, receive the current measured environmental data from the environmental sensors 106 in step 450, then determine location information based on the current environmental data in step 460 (as previously described), and transmit the determined location information to the external device 300 in step 470.

### Second embodiment

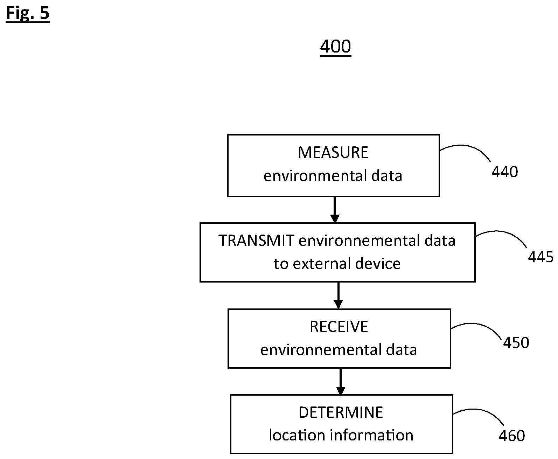

The second embodiment is based on the first embodiment and only differs from the first embodiment by the aspects described below. Figure 5 shows an illustrative flowchart of the method 400 according to the second embodiment.

In the second embodiment, after the step 440 of measuring environmental data by the environmental sensors 106 measuring various environmental properties in an environment surrounding the device 100 and object 200, the measured environmental data is wirelessly transmitted by the wireless communication device 100 to the external device 300 in a step 445. In the step 450, the processor 306 of the external device 300 receives the measured environmental data.

Then, in the step 460, the processor 306 of the external device 300 determines the location information of the device 100 and object 200 using the measured environmental data wirelessly received from the device 100. The step 460 according to the second embodiment is similar to the step 460 according to the first embodiment, with the difference that it is carried out by the external device 300 (instead of being carried out by the device 100 attached to the object 200).

The steps 440, 445, 450 and 460 of the method 400 according to the second embodiment may be performed periodically and/or upon request. The request may be entered by a user via a user interface of the external device 300. Alternatively, or additionally, the steps 440, 445, 450 and 460 of the method 400 according to the second embodiment may be performed upon detection of a predetermined event, such as a fall of the device 100, in step 430 as previously described. The predetermined event may be detected by the device 100 based on sensor data.

The external device 300 may be located within a wireless or radio coverage range of the wireless communication device 100, for example within the Bluetooth or Bluetooth Low Energy range. It may be for example a gateway or a user equipment, such as a smartphone.

Optionally, the external device 300 may transmit the determined location information to another external device, for example a user equipment. For example, the external device 300 may be a gateway connected to another network, for example a WiFi network or a mobile communication network, and configured to transmit the determined location information to another external device, such as a user equipment, via said other network.

In addition, for the method 400 and other processes and methods disclosed herein, the flowchart shows functionality and operation of one possible implementation of present embodiments. In this regard, each block may represent a module, a segment, a portion of a manufacturing or operation process, or a portion of program code, which includes one or more instructions executable by a processor for implementing specific logical functions or steps in the process. The program code may be stored on any type of computer readable medium, for example, such as a storage device including a disk or hard drive. The computer readable medium may include non-transitory computer readable medium, for example, such as computer-readable media that stores data for short periods of time like register memory, processor cache and Random Access Memory (RAM). The computer readable medium may also include non-transitory media, such as secondary or persistent long term storage, like read only memory (ROM), optical or magnetic disks, compact-disc read only memory (CD-ROM), for example. The computer readable media may also be any other volatile or non-volatile storage systems. The computer readable medium may be considered a computer readable storage medium, for example, or a tangible storage device.

The wireless communication device 100 is implemented with hardware and software. The present disclosure also concerns:
- a computer program comprising instructions which, when the program is executed by a computer, cause the computer to carry out the method 400 previously described;
- a computer-readable medium having stored thereon the computer program above defined.

### FINAL CONSIDERATIONS

Although an overview of the inventive subject matter has been described with reference to specific example embodiments, various modifications and changes may be made to these embodiments without departing from the broader spirit and scope of embodiments of the present invention. For example, various embodiments of features thereof may be mixed and matched or made optional by a person of ordinary skill in the art. Therefore, the Detailed Description is not to be taken in a limiting sense, and the scope of various embodiments is defined only by the appended claims, along with the full range of equivalents to which such claims are entitled.

## Claims

1. A method for locating an object (200) attached to a wireless communication device (100), said wireless communication device (100) including a plurality of environmental sensors (106) configured to measure various environmental properties of an environment surrounding the object (200), the method comprising the steps, performed by a processor (114; 306), of:
- receiving (450) measured environmental data from the plurality of environmental sensors (106) measuring the various environmental properties;
- determining (460) location information of the object (200) using the measured environmental data.

2. The method according to claim 1, wherein the step (460) of determining the location information of the object (200) includes a step of determining at least one category of location where the object (200) is located, from a plurality of predetermined categories of location, based on the measured environmental data.

3. The method according to claim 2, wherein the step (460) of determining the at least one category of location where the object (200) is located comprises:
- providing the measured environmental data as input to a trained machine learning model (112);
- outputting said at least one category of location from the trained machine learning model (112).

4. The method according to any of claims 1 to 3, wherein the steps of receiving (450) the measured environmental data from the plurality of environmental sensors (106) and determining (460) a location information of the object (200) using the measured environmental data are periodically performed.

5. The method according to any of claims 1 to 4, further comprising a step (470) of wirelessly transmitting the determined location information from the wireless communication device (100) to an external device (300).

6. The method according to claim 5 when depending on claim 2 or 3, further comprising the steps, performed by the processor (114; 306), of:
- comparing the determined category of location to a group of abnormal categories of location; and
- detecting (465) an abnormality of location if the determined category of location matches an abnormal category of location;
wherein the step (470) of transmitting the location information from the wireless communication device (100) to the external device (300) is executed upon detection of an abnormality of location.

7. The method according to any of claims 1 to 6,
further comprising a step (430) of detecting a predetermined event based on sensor data; and
wherein the steps (450, 460) of receiving the measured environmental data from the plurality of environmental sensors and determining a location information of the object using the measured environmental data are performed upon detection (430) of the predetermined event.

8. The method according to any of claims 1 to 7, wherein the measured environmental data includes data from the group including temperature data, pressure data, humidity data, gas data, air quality data and light data.

9. The method according to any of claim 1 to 8, wherein the step (460) of determining a location information of the object using the measured environmental data is performed by said wireless communication device (100).

10. The method according to any of claim 1 to 8, further comprising a step (445) of wirelessly transmitting, from the wireless communication device (100) to an external device (300), the measured environmental data from the plurality of environmental sensors (106) measuring the various environmental properties, and
wherein the step (460) of determining a location information of the object (200) using the measured environmental data is performed by said external device (300).

11. A wireless communication device(100) for locating an object (200), configured to be attached to said object (200), comprising a plurality of environmental sensors (106) configured to measure various environmental properties of an environment of the object (200), and a processor (114) configured to carry out the steps of the method according to any of claims 1 to 9.

12. A device (300) for locating an object (200) to which a wireless communication device is attached, said wireless communication device (100) having a plurality of environmental sensors (106) configured to measure various environmental properties of an environment of the object (200), said device (300) for locating the object (200) including
- a wireless communication module (302) configured to communicate with said wireless communication device (100), and
- a processor (306) configured to carry out the steps of the method according to any of claims 1 to 8 and 10.

13. A computer program comprising instructions which, when the program is executed by a computer, cause the computer to carry out the method according to any of claims 1 to 10.

14. A computer-readable medium having stored thereon the computer program of claim 13.
